# FASCICULE DE BREVET EUROPEEN

(11) **EP 3 988 193 B1**
(45) Date de publication et mention de la délivrance du brevet: **19.07.2023**
(21) Numéro de dépôt: 21200291.9
(22) Date de dépôt: 30.09.2021
(51) Int. Cl.: B01D 1/28, B01D 3/14, C02F 1/04

(54) **PROCÉDÉ DE TRAITEMENT D'UN LIQUIDE CONTENANT UN SOLVANT DISSOUT ET DES IMPURETÉS NON-VOLATILES**
VERFAHREN ZUR BEHANDLUNG EINER FLÜSSIGKEIT, DIE EIN GELÖSTES LÖSUNGSMITTEL UND NICHTFLÜCHTIGE VERUNREINIGUNGEN ENTHÄLT
METHOD FOR PROCESSING A LIQUID CONTAINING A DISSOLVED SOLVENT AND NON-VOLATILE IMPURITIES

(30) Priorité: 26.10.2020 FR 2010959
(43) Date de publication de la demande: 27.04.2022
(73) Titulaire: France EVAPORATION, 59139 Noyelles les Seclin (FR)
(72) Inventeur: DEHAY, Alain, 59840 Lompret (FR)
(74) Mandataire: Boubal, Denis Henri Jacques

(56) Documents cités:
- EP-A1- 3 679 999
- US-A1- 2009 057 128

## Description

La présente divulgation est relative à un procédé de traitement d'un liquide contenant un solvant dissout et des impuretés non-volatiles, ledit procédé étant configuré pour séparer le liquide contenant un solvant dissout et des impuretés non-volatiles en :
- une vapeur chargée en solvant, notamment en NH₃
- un liquide purifié du solvant et des impuretés non volatiles, tel que de l'eau
- un liquide purifié des solvants et concentré en impuretés non-volatiles tel que de l'eau dépourvue de NH₃ et chargée en Na₂SO₄

La présente divulgation trouve une application particulière lorsque le liquide est de l'eau, le solvant est de l'ammoniac (NH₃) et les impuretés sont un sel en particulier le sulfate de sodium (Na₂SO₄).

### Domaine technique

La présente divulgation relève du domaine des procédés de traitement, et des installations de traitement convenant pour séparer un liquide contenant un solvant dissout et des impuretés non-volatiles :
- une vapeur chargée en solvant,
- un liquide purifié du solvant et des impuretés non volatiles, et
- un liquide purifié des solvants et concentré en impuretés non-volatiles.

### Technique antérieure

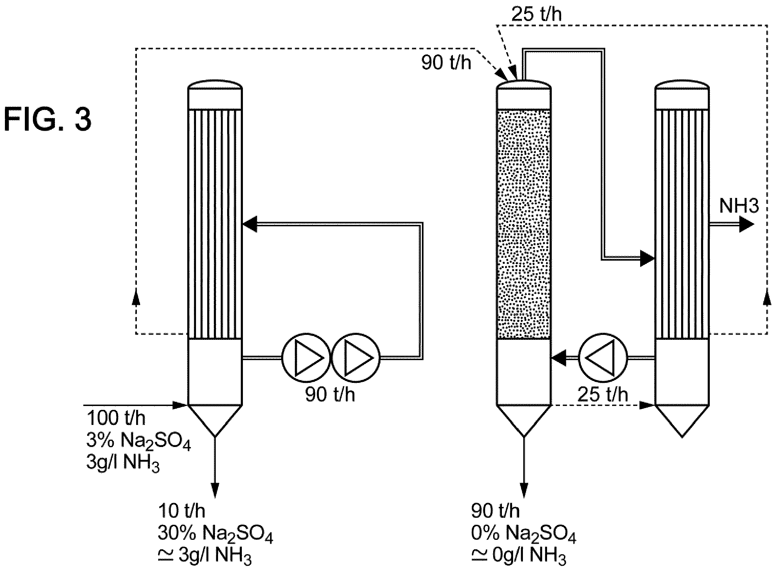

Il est connu de l'état de la technique connu de la présente Demanderesse, un premier procédé illustré à la figure 3 mis en oeuvre dans une installation comprenant, à gauche, un dispositif évaporateur mettant en oeuvre un premier échangeur évaporateur, et à droite une colonne de distillation, associée à un dispositif générateur de vapeur de transport comprenant un second échangeur évaporateur.

Le liquide brut à traiter a un débit de 100t/h et est de l'eau contenant 3% en masse de Na₂SO₄ et 3g/l de NH₃, et comme pour les exemples illustrés selon la présente divulgation aux figures 1 et 2, ou encore pour le deuxième état de la technique illustré à la figure 4.

A la figure 3, ce liquide brut qui est acheminé au secondaire de l'échangeur évaporateur. Ce liquide brut est chauffé et vaporisé partiellement à l'intérieur de tubes de l'échangeur par la vapeur compressée chargée de NH₃, et purifiée en Na₂SO₄ en provenant du secondaire et vient transmettre son énergie aux surfaces externes des tubes dans le primaire de l'échangeur évaporateur, selon un débit de 90t/h. Le liquide récupéré dans le secondaire de l'évaporateur sort du secondaire à raison de 10t/h avec une concentration de 30% en masse de Na₂SO₄ et une concentration proche de 3 g/l en NH₃

La vapeur chargée en NH₃ est condensée au primaire de l'échangeur évaporateur, et ce condensat est acheminé en tête de la colonne de distillation à raison de 90t/l, sur la droite de la figure 3. Un autre condensat résultant de la condensation de la vapeur de transport chargée en NH₃ au primaire de l'échangeur évaporateur alimente la colonne selon un débit de 25t/h. La colonne reçoit donc au total 115 t/h de liquide chargé en NH3.

Dans cette colonne de distillation, on extrait le NH3 contenu dans le condensat par échange avec une vapeur de transport selon un débit de 25t/h. L'eau purifiée chute en bas de la colonne de distillation selon un débit de 115 t/h (0% en masse Na₂SO₄ et proche de 0 g/l en NH₃) :
- 90 t/h de cette eau est évacuée de l'installation,
- 25t/h de cette eau alimente le secondaire de l'échangeur évaporateur pour être vaporisée au secondaire en vue de la génération de la vapeur de transport.

La vapeur de transport saturée en NH₃ acheminée au primaire du deuxième échangeur évaporateur échange avec la surface extérieure des tubes de l'échangeur et permet de vaporiser l'eau purifiée circulant à l'intérieur des tubes dans le secondaire de l'échangeur évaporateur. Cette vapeur est compressée avant d'alimenter la base de la colonne selon le débit de 25 t/h.

Au secondaire, une partie de la vapeur de transport chargée en NH₃ est condensée, le condensat recirculé selon le débit de 25t/H en tête de colonne. Une autre partie de la vapeur chargée en NH3 sort du secondaire en vue d'être condensée.

Un tel procédé mis en oeuvre à la figure 3 présente les défauts suivants :
- il reste du solvant NH3 en quantité dans l'eau concentrée en impuretés non volatiles (30% Na SO4 et environ 3g/l NH3), en sortie du primaire de l'échangeur évaporateur,
- cette solution nécessite en pratique plusieurs dispositif d'évaporation (et non un seul comme illustré à la figure 3).

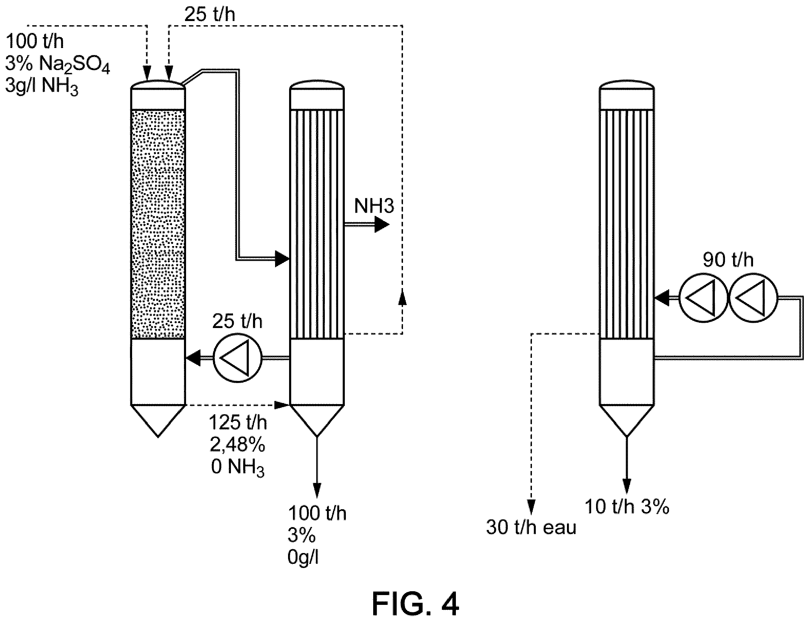

La présente Demanderesse connaît encore de l'état de la technique un procédé de traitement illustré à la figure 4, et qui met en oeuvre une colonne de distillation associée à un dispositif générateur de vapeur (à gauche), et un dispositif de concentration comprenant un échangeur évaporateur (à droite).

Dans cet état de la technique illustré à la figure 4, le liquide brut à traiter présente un débit de 100t/h et est de l'eau contenant 3% en masse de Na₂SO₄ et 3g/l de NH₃. Ce liquide brut alimente la tête de la colonne de distillation selon le débit de 100t/h. La tête de la colonne reçoit encore un condensat chargé en NH₃ provenant de la condensation de la vapeur saturée en NH3 dans le primaire de l'échangeur évaporateur du dispositif générateur de vapeur selon un débit de 25t/H. La colonne reçoit donc 125 t/h de liquide chargé en NH₃.

On extrait le NH3 par échange avec une vapeur de transport circulant à contrecourant des liquides à traiter dans la colonne et selon un débit de 25t/H provenant du dispositif générateur de vapeur.

La totalité de l'eau purifiée des solvants est acheminée au secondaire de l'échangeur évaporateur selon un débit de 125 t/h avec une concentration de 2,4% en masse de Na₂SO₄ et 0% de NH3. Un débit de 25t/h de cette eau est vaporisée en la vapeur de transport et compressée pour alimenter la base de la colonne de distillation, alors qu'un débit de 100 t/h de cette eau est concentrée et sort avec une concentration de 3% en masse de Na₂SO₄.

Les 100t/h alimentent le secondaire de l'échangeur évaporeur de l'évaporateur en circulant de haut en bas à l'intérieur de tubes de l'échangeur évaporateur. 90t/H sont vaporisés en vapeur dépourvue de Na₂SO₄ et cette vapeur est compressée pour alimenter le primaire de l'échangeur évaporateur. Cette vapeur échange avec la surface externe des tubes afin de vaporiser le liquide circulant à l'intérieur des tubes et se condense en une eau purifiée selon un débit de 90t/h.

Selon les constations de la présente Demanderesse, le rendement énergétique pour séparer le liquide brut en :
- la vapeur chargée en solvant, en l'espèce NH₃,
- le liquide purifié du solvant et des impuretés non volatiles, en l'espèce l'eau purifiée, et
- le liquide purifié des solvants concentré en impuretés non-volatiles, en l'espèce l'eau dépourvue de NH₃ et chargée en Na₂SO₄,
n'est pas optimal et peut être amélioré.

On connaît encore de la demande publiée sous le numéro FR3069173 A1 (EP3679999) de la présente Demanderesse un procédé de traitement d'un liquide brut contenant des solvants dissouts et des impuretés non-volatiles, ledit procédé comprenant la fourniture d'une installation de traitement de liquides comprenant :
-- une première colonne de distillation,
-- une deuxième colonne de distillation,
-- un dispositif de génération de vapeur de transport, procédé au cours duquel les solvants sont extraits du liquide brut dans la première colonne de distillation par l'intermédiaire de la vapeur de transport.

De manière notable, dans cette antériorité, le liquide purifié des solvants et comprenant des impuretés non-volatiles chutant en partie basse de la première colonne de distillation à l'issue de cette étape est évacué définitivement de l'installation, sans pénétrer dans la deuxième colonne de distillation ou dans le dispositif de génération de vapeur de transport.

### Résumé

La présente divulgation vient améliorer la situation.

Il est proposé un procédé de traitement d'un liquide contenant un solvant dissout et des impuretés non-volatiles, ledit procédé étant configuré pour séparer le liquide contenant un solvant dissout et des impuretés non-volatiles en un condensat chargé en solvant, un liquide purifié du solvant et des impuretés non volatiles, et un liquide purifié des solvants et concentré en impuretés non-volatiles,
ledit procédé comprenant la fourniture d'une installation de traitement de liquides comprenant :
   - une première colonne de distillation, dite colonne de distillation des liquides bruts
   - une deuxième colonne de distillation, dite colonne de distillation des condensats
   - un dispositif de génération de vapeur de transport, comprenant un échangeur évaporateur muni d'un primaire et d'un secondaire, générant une vapeur de transport,
ledit procédé de traitement comprenant les étapes simultanées :
   (a) Alimentation de la première colonne de distillation de l'installation avec le liquide brut contenant un solvant dissout et des impuretés non-volatiles, ledit liquide brut n'alimentant pas la deuxième colonne de distillation,
   (b) Extraction du solvant du liquide brut dans la première colonne de distillation par l'intermédiaire de la vapeur de transport, le liquide purifié du solvant et comprenant les impuretés non-volatiles chutant en partie basse de la première colonne de distillation,
   (c) Alimentation du primaire de l'échangeur évaporateur avec de la vapeur de transport chargée de solvants issue de la première colonne de distillation, afin de fournir la chaleur nécessaire à la vaporisation d'un liquide à vaporiser dans le secondaire de l'échangeur évaporateur prévu pour former la vapeur de transport,
   (d) Vaporisation dans le secondaire de l'échangeur évaporateur du liquide destiné à former la vapeur de transport, la vapeur de transport chargée du solvant se condensant partiellement en un condensat chargé du solvant dans le primaire de l'échangeur évaporateur, la vapeur chargée du solvant non condensée demeurant dans le primaire de l'échangeur évaporateur étant purgée en vue d'être condensée en ledit condensat chargé en solvant,
   (e) Alimentation de la deuxième colonne de distillation avec le condensat chargé du solvant issu de l'étape (d) de vaporisation dans l'échangeur-évaporateur,
   (f) Extraction du solvant du condensat chargé de solvants dans la deuxième colonne de distillation, le condensat purifié se trouvant dans des moyens de récupération et étant évacué sans alimenter l'échangeur évaporateur,
   (g) Alimentation du primaire de l'échangeur évaporateur avec la vapeur chargée de solvants en sortie de la deuxième colonne de distillation, afin de fournir la chaleur nécessaire à la vaporisation du liquide prévu pour former la vapeur de transport,
   (h) Compression de la vapeur de transport en amont ou en aval de l'échangeur-évaporateur, par l'intermédiaire de moyens compresseurs afin d'augmenter l'enthalpie de la vapeur de transport employée au cours des étapes (c) et (g),
   (i) Alimentation de la première colonne de distillation et de la deuxième colonne de distillation avec la vapeur de transport produite à l'étape (d),
   (j) Alimentation de l'échangeur évaporateur avec le liquide purifié des solvants et comprenant les impuretés non-volatiles, récupéré en partie basse de la première colonne de distillation à l'étape (b), qui constitue directement le liquide à vaporiser dans le secondaire de l'échangeur évaporateur à l'étape (d), ou encore indirectement après concentration des impuretés non volatiles dans un équipement de concentration, et dans lequel une partie du liquide à vaporiser alimentant le secondaire de l'échangeur évaporateur est vaporisée en ladite vapeur de transport, tandis qu'une autre partie du liquide est concentrée dans le secondaire de l'échangeur évaporateur, puis évacuée obtenant un liquide purifié de solvant et concentré en impuretés non volatiles sortant de l'échangeur évaporateur.

Selon un mode de réalisation, à l'étape (j) le liquide purifié du solvant et comprenant les impuretés non-volatiles chutant en partie basse de la première colonne de distillation à l'étape (b) constitue directement le liquide à vaporiser dans le secondaire de l'échangeur-évaporateur.

Alternativement, et selon un autre mode de réalisation, à l'étape (j) le liquide purifié du solvant et comprenant les impuretés non-volatiles chutant en partie basse de la première colonne de distillation à l'étape (b) alimente une entrée de l'équipement de concentration qui est un équipement de concentration par osmose inverse, le liquide filtré ayant traversé une membrane de l'équipement de concentration par osmose inverse étant évacué d'une sortie du liquide osmosé de l'équipement, sans être acheminé à l'échangeur évaporateur, tandis que le liquide purifié du solvant et concentré en impuretés non volatiles n'ayant pas traversé la membrane sort d'une sortie des concentrats de l'équipement de concentration par osmose inverse, constituant le liquide à vaporiser dans le secondaire de l'échangeur évaporateur.

Selon un mode de réalisation, ledit procédé comprenant la fourniture de ladite installation de traitement de liquides comprenant la première colonne de distillation, la seconde colonne de distillation et l'échangeur évaporateur, dit premier échangeur évaporateur, ladite installation présentant encore un deuxième échangeur évaporateur muni d'un primaire et d'un secondaire, ledit procédé comprenant, outre les étapes simultanées (a) à (j), les étapes simultanées suivantes :
(k) Acheminement du liquide purifié du solvant et concentré en impuretés non-volatiles en sortie du secondaire du premier échangeur évaporateur jusqu'au deuxième échangeur évaporeur,
(l) Vaporisation dans le secondaire du deuxième échangeur évaporateur du liquide purifié du solvant et concentré en impuretés non-volatiles, obtenant une vapeur purifiée de solvant et des impuretés non volatiles, et un second liquide purifié des solvants et concentré en impuretés non volatiles, qui est évacué en sortie du deuxième échangeur évaporateur.
(m) Compression des vapeurs du secondaire du deuxième échangeur évaporateur afin d'augmenter leur enthalpie, et acheminement des vapeurs compressées au primaire du deuxième échangeur évaporateur.
(n) Condensation des vapeurs purifiées du solvant et des impuretés non volatiles ayant échangé au primaire de l'échangeur évaporateur et évacuation du liquide condensé purifié des solvants et des impuretés non-volatiles.

Selon un mode de réalisation :
- le liquide est de l'eau,
- le solvant dissout est : NH₃
- les impuretés non volatiles sont : Na₂SO₄.

Selon un mode de réalisation pour une installation de traitement dépourvue de l'équipement de concentration par osmose inverse et pourvue du second échangeur dans lequel :
- la concentration des impuretés non-volatiles dans le liquide brut est comprise entre 0,5% et 5% en masse, en particulier entre 2% et 4% en masse, en particulier 3%,
- la concentration des impuretés non-volatiles dans le liquide purifié du solvant et concentré en impuretés non-volatiles en sortie du premier échangeur évaporateur est comprise entre 2.5 % et 10% en masse, en particulier entre 2.5 % et 5.5% en masse, en particulier 5%.
- la concentration des impuretés non-volatiles dans le second liquide purifié de solvant et concentré en impuretés non-volatiles en sortie du deuxième échangeur-évaporateur est comprise entre 10% % et 40% en masse, en particulier entre 20% et 32%, en particulier 30%.

Selon un mode de réalisation pour une installation de traitement pourvue de l'équipement de concentration par osmose inverse et pourvue du second échangeur :
- la concentration des impuretés non-volatiles dans le liquide brut est comprise entre 0,5% et 5% en masse, en particulier entre 2% et 4% en masse en particulier 3%,
- la concentration des impuretés non volatiles dans le liquide purifié de solvant et concentré en impuretés non volatiles sortant de la sortie des concentrats de l'équipement de concentration par osmose inverse est comprise entre 2% et 10% en masse, en particulier entre 4% et 8% en masse en particulier 6%,
- la concentration des impuretés non volatiles dans le liquide purifié du solvant et concentré en impuretés non volatiles en sortie du premier échangeur évaporateur est comprise entre 4% et 30% en masse, en masse, en particulier entre 8% et 16% en masse en particulier 12%,
- la concentration des impuretés non-volatiles dans le second liquide purifié du solvant et concentré en impuretés non-volatiles en sortie du deuxième échangeur évaporateur est comprise entre 10% % et 40% en masse, en particulier entre 20% et 32% en masse, en particulier 30%.

Selon un mode de réalisation, le débit de liquide brut alimentant la première colonne de distillation est supérieur à 30 t /h, notamment supérieur à 70 t /h, tel que par exemple 100 t/h.

D'autres caractéristiques, détails et avantages apparaîtront à la lecture de la description détaillée ci-après, et à l'analyse des dessins annexés, sur lesquels :
**Fig. 1**

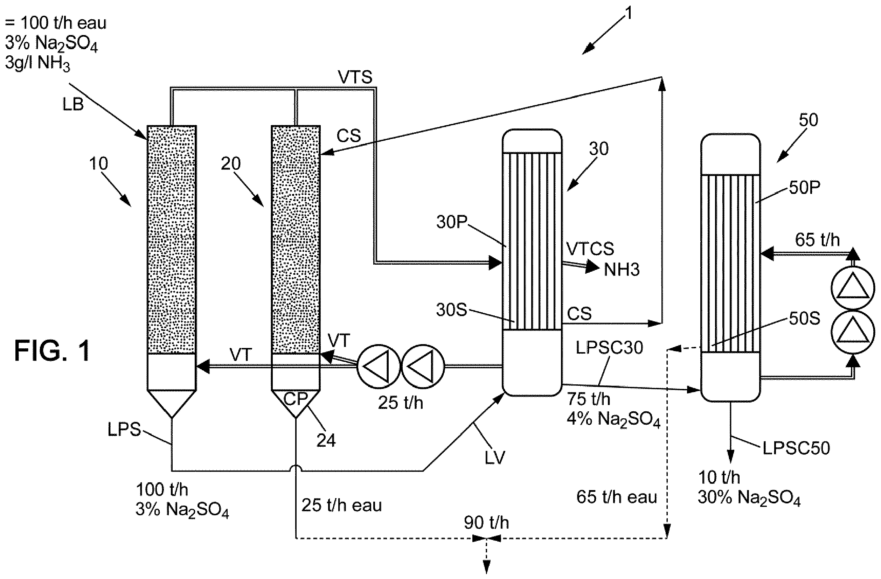

   [Fig. 1] illustre le procédé de traitement d'un liquide contenant un solvant dissout et des impuretés non-volatiles conforme à une première variante de la présente divulgation mis en oeuvre dans une installation comprenant une première colonne de distillation, une deuxième colonne de distillation, un premier échangeur-évaporateur et un deuxième échangeur évaporateur, le liquide purifié du solvant et contenant les impuretés non-volatiles, récupéré en partie basse de la première colonne de distillation étant acheminé directement au secondaire du premier échangeur évaporateur.
**Fig. 2**

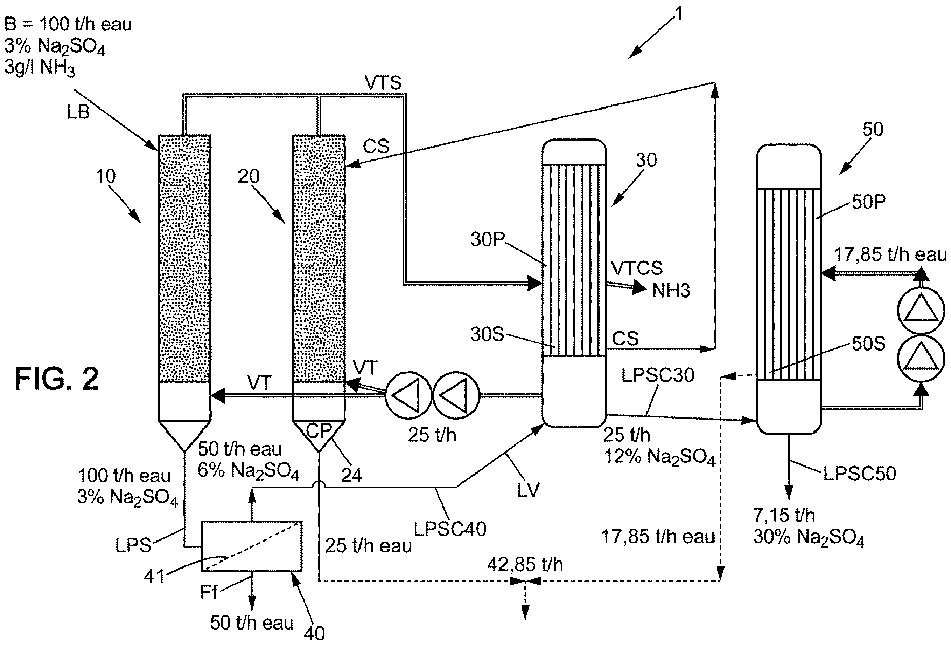

   [Fig. 2] illustre le procédé de traitement d'un liquide contenant un solvant dissout et des impuretés non-volatiles conforme à une deuxième variante de la présente divulgation pour laquelle le liquide purifié du solvant et contenant les impuretés non volatiles, récupéré en partie basse de la première colonne de distillation, est acheminé dans un équipement de concentration par osmose inverse afin d'augmenter sa concentration en impuretés non-volatiles, le liquide purifié du solvant et concentré en impuretés non volatiles sortant de l'équipement de concentration étant ensuite acheminé au secondaire du premier échangeur évaporateur.
**Fig. 3**
   [Fig. 3] montre un procédé de traitement d'un liquide contenant un solvant dissout et des impuretés non-volatiles selon un premier état de la technique connu.
**Fig. 4**
   [Fig. 4] montre un procédé de traitement d'un liquide contenant un solvant dissout et des impuretés non-volatiles selon un deuxième état de la technique connu.

### Description des modes de réalisation

Les dessins et la description ci-après contiennent, pour l'essentiel, des éléments de caractère certain. Ils pourront donc non seulement servir à mieux faire comprendre la présente divulgation, mais aussi contribuer à sa définition, le cas échéant.

La présente divulgation est relative à un procédé de traitement d'un liquide contenant un solvant dissout et des impuretés non-volatiles, ledit procédé étant configuré pour séparer le liquide contenant un solvant dissout et des impuretés non-volatiles en une vapeur chargée en solvant, un liquide purifié du solvant et des impuretés non volatiles, et un liquide purifié des solvants et concentré en impuretés non-volatiles.

La présente divulgation trouve une application particulière lorsque le liquide est de l'eau, le solvant est de l'ammoniac (NH₃) et les impuretés sont un sel en particulier le sulfate de sodium (Na₂SO₄).

Le procédé comprend la fourniture d'une installation de traitement de liquides 1 comprenant :
- une première colonne de distillation 10, dite colonne de distillation des liquides bruts
- une deuxième colonne de distillation 20, dite colonne de distillation des condensats
- un dispositif de génération de vapeur de transport VT, comprenant un échangeur évaporateur 30 muni d'un primaire 30P et d'un secondaire 30S, générant une vapeur de transport VT.

Le procédé de traitement comprend les étapes simultanées :
(a) Alimentation de la première colonne de distillation 10 de l'installation 1 avec le liquide brut LB contenant un solvant dissout et des impuretés non-volatiles, ledit liquide brut LB n'alimentant pas la deuxième colonne de distillation 20,
(b) Extraction du solvant du liquide brut LB dans la première colonne de distillation 10 par l'intermédiaire de la vapeur de transport VT, le liquide LPS purifié du solvant et comprenant les impuretés non-volatiles chutant en partie basse de la première colonne de distillation 10,
(c) Alimentation du primaire 30P de l'échangeur-évaporateur 30 avec de la vapeur de transport chargée de solvants VTS issue de la première colonne de distillation 10, afin de fournir la chaleur nécessaire à la vaporisation d'un liquide LV à vaporiser dans le secondaire 30S de l'échangeur-évaporateur 30 prévu pour former la vapeur de transport VT,
(d) Vaporisation dans le secondaire 30S de l'échangeur-évaporateur 30 du liquide LV destiné à former la vapeur de transport VT, la vapeur de transport chargée du solvant se condensant partiellement en un condensat CS chargé du solvant dans le primaire 30P de l'échangeur-évaporateur 30, la vapeur VTCS chargée du solvant non condensée demeurant dans le primaire 30P de l'échangeur évaporateur 30 étant purgée en vue d'être condensée
(e) Alimentation de la deuxième colonne de distillation 20 avec le condensat CS chargé du solvant issu de l'étape (d) de vaporisation dans l'échangeur-évaporateur 30,
(f) Extraction du solvant du condensat chargé de solvants CS dans la deuxième colonne de distillation 20, le condensat purifié CP se trouvant dans des moyens de récupération 24 et étant évacué de l'installation de traitement de liquide sans alimenter l'échangeur-évaporateur,
(g) Alimentation du primaire 30P de l'échangeur-évaporateur 30 avec la vapeur chargée de solvants VTS en sortie de la deuxième colonne de distillation 20, afin de fournir la chaleur nécessaire à la vaporisation du liquide LV prévu pour former la vapeur de transport VT,
(h) Compression de la vapeur de transport VT en amont ou en aval de l'échangeur-évaporateur 30, par l'intermédiaire de moyens compresseurs afin d'augmenter l'enthalpie de la vapeur de transport VT employée au cours des étapes (c) et (g),
(i) Alimentation de la première colonne de distillation 10 et de la deuxième colonne de distillation 20 avec la vapeur de transport VT produite à l'étape (d),
(j) Alimentation de l'échangeur évaporateur 30 avec le liquide LPS purifié des solvants et comprenant les impuretés non-volatiles, récupéré en partie basse de la première colonne de distillation 1 à l'étape (b), qui constitue directement le liquide (LV) à vaporiser dans le secondaire 30S de l'échangeur évaporateur 30 à l'étape (d), ou encore indirectement après concentration des impuretés non volatiles dans un équipement de concentration 40,
et dans lequel une partie du liquide à vaporiser LV alimentant le secondaire 30S de l'échangeur évaporateur 30 est vaporisée en ladite vapeur de transport VT tandis qu'une autre partie du liquide est concentrée dans le secondaire 30S de l'échangeur évaporateur 30, puis évacuée obtenant un liquide purifié de solvant et concentré en impureté en impuretés non volatiles LPSC30 sortant de l'échangeur évaporateur 30.

L'échangeur évaporateur 30 du dispositif générateur de vapeur peut être un échangeur à tubes notamment verticaux, reçus dans une cuve. Le primaire 30P de l'échangeur évaporateur 30 est constitué par une enceinte délimitée entre la paroi interne de la cuve et les surfaces externes des tubes, alors que le secondaire 30S de l'échangeur-évaporateur 30 est constitué essentiellement par les volumes intérieurs des tubes. Le liquide à vaporiser LV est alimenté au sein des tubes, et s'écoule par gravité, à l'intérieur de ceux-ci, de leur extrémité supérieure jusqu'à leur extrémité inférieure. Le liquide à vaporiser s'écoulant à l'intérieur des tubes est vaporisé partiellement par la chaleur transmise à travers des tubes, provenant de la vapeur de transport saturée en solvant VTS alimentant ladite enceinte délimitée entre la paroi de cuves et les parois externes des tubes.

Le liquide purifié de solvant et concentré en impuretés non volatiles s'écoulant à l'extrémité basse des tubes, alors concentré dans le secondaire 30S de l'échangeur évaporateur 30, est ainsi récupéré dans un collecteur aux extrémités basses des tubes, puis évacué, obtenant le liquide purifié de solvant et concentré en impureté en impuretés non volatiles LPSC30 sortant de l'échangeur évaporateur 30

Selon un mode de réalisation illustré à titre d'exemple à la figure 1, à l'étape (j) le liquide LPS purifié du solvant et comprenant les impuretés non-volatiles chutant en partie basse de la première colonne de distillation 10 à l'étape (b) constitue directement le liquide LV à vaporiser dans le secondaire 30S de l'échangeur-évaporateur 30.

Le procédé de traitement permet ainsi de séparer le liquide brut contenant un solvant et des impuretés non-volatiles, par exemple de l'eau contenant NH₃ (solvant) et Na₂SO₄ (impuretés non volatiles) en :
- une vapeur chargée en solvant, notamment chargée en NH₃ sortant du primaire 30P de l'échangeur-évaporateur 30, constituée par la vapeur de transport chargé en solvant VTCS, qui peut être ensuite condensée en un condensat chargé en solvant,
- le liquide purifié du solvant et des impuretés notamment de l'eau qui comprend le condensat purifié CP récupéré dans les moyens de récupération 24, en partie basse de la deuxième colonne de distillation 20,
- le liquide purifié du solvant et concentré en impuretés-non volatile LPSC30 (notamment Na₂SO₄) à la sortie du secondaire de l'échangeur évaporateur.

Selon un autre mode de réalisation illustré à titre indicatif à la figure 2, à l'étape (j) le liquide LPS purifié du solvant et comprenant les impuretés non-volatiles chutant en partie basse de la première colonne de distillation 10 à l'étape (b) alimente une entrée de l'équipement 40 de concentration qui peut être un équipement de concentration par osmose inverse.

Le liquide filtré Ff ayant traversé une membrane 41 de l'équipement d'osmose inverse est évacué d'une sortie du liquide osmosé de l'équipement de concentration par osmose inverse, sans être acheminé à l'échangeur évaporateur 30, tandis que le liquide purifié du solvant et concentré en impuretés non volatiles LPSC40 n'ayant pas traversé la membrane 41 sort d'une sortie de concentrats de l'équipement d'osmose inverse.

Le liquide purifié de solvant et concentré en impuretés non-volatiles LPSC40 sortant de la sortie des concentrats de l'équipement de concentration par osmose inverse constitue le liquide LV à vaporiser dans le secondaire 30S de l'échangeur-évaporateur 30.

La concentration des impuretés non-volatiles dans le liquide purifié du solvant et concentré en impuretés non volatiles LPSC40 s'écoulant de la sortie des concentrats de l'équipement d'osmose inverse peut être augmenté de 70% à 130%, par rapport à la concentration des impuretés non-volatiles dans le liquide purifié des solvants LPS, et par exemple de 100%.

Par exemple la concentration est augmentée de 100% (à savoir doublée) selon l'exemple de la figure 2 lorsque la concentration du NA₂SO₄ est de 3% en masse dans le liquide purifié de solvant, en amont de l'équipement d'osmose inverse et passe donc à 6% en masse dans le liquide purifié du solvant et concentré en impuretés non volatiles LPSC40.

Selon ce mode de réalisation avec équipement de concentration par osmose inverse on remarque que le liquide purifié du solvant et des impuretés non-volatiles qui a été séparé par le procédé de traitement comprend non seulement le condensat purifié CP récupéré dans les moyens de récupération 24, en partie basse de la deuxième colonne de distillation 20, mais encore le liquide filtré Ff ayant traversé la membrane 41 de l'équipement de concentration par osmose inverse 40.

On remarque encore que l'ajout de l'équipement de concentration par osmose inverse 40 ; selon l'exemple de la figure 2, diminue la quantité de liquide à vaporiser Lv dans le secondaire 30S de l'échangeur-évaporateur 30, obtenant un effet de synergie pour la concentration des impuretés non volatiles dans l'échangeur évaporateur 30.

Cet effet de synergie est compréhensible de la comparaison du procédé selon la figure 1 (sans équipement de concentration par osmose inverse) avec le procédé de la figure 2 (avec équipement de concentration par osmose inverse).

Ainsi et à la figure 1 le liquide purifié des solvant LPS et contenant les impuretés non-volatiles (NA₂SO₄ à 3 % en masse) est acheminé directement au secondaire 30S de l'échangeur évaporateur à un débit de 100 t/h, ce liquide étant :
- vaporisé à raison de 25t/h en vapeur de transport VT, qui est compressée avant d'être acheminée à la base de la première colonne de distillation 10, ainsi qu'à la base de la deuxième colonne de distillation 20,
- concentré en le liquide purifié de solvant et concentré en impuretés non-volatiles LPSC30 sortant de l'échangeur évaporateur 30 avec un débit de 75t/h et une concentration en impuretés non-volatiles (NA₂SO₄) à 4 % en masse.

Selon cet exemple de la figure 1 représentant le mode de réalisation sans équipement d'osmose inverse, on obtient une augmentation de 1% en masse en valeur absolue ou d'un ratio de 1/3 (33,33%) en relatif.

Par comparaison, et à la figure 2 le liquide purifié des solvant LPS et contenant les impuretés non-volatiles (NA₂SO₄ à 3 % en masse) est acheminé à l'entrée de l'équipement de concentration par osmose inverse à un débit de 100 t/h, ce liquide étant :
- filtré pour moitié par la membrane en le flux filtré sortant de la sortie de liquide osmosé de l'équipement formant une partie du liquide purifié du solvant et des impuretés non-volatiles à raison d'un débit de 50 t/h (eau),
- concentré pour moitié en le liquide purifié du solvant et concentré en impuretés non volatiles LPSC40 sortant de la sortie des concentrats de l'équipement d'osmose inverse à raison d'un débit de 50 t/h avec une concentration de NA₂SO₄ de 6% en masse.

Ce liquide purifié du solvant et concentré en impuretés non volatiles LPSC40 sortant de la sortie des concentrats de l'équipement de concentration par osmose inverse 40 (d'un débit de 50 t/h avec une concentration de NA₂SO₄ de 6% en masse) est acheminé en totalité au secondaire 30S de l'échangeur évaporateur 30 ce liquide étant :
- vaporisé à raison de 25t/h en vapeur de transport VT, qui est compressée avant d'être acheminée à la base de la première colonne de distillation 10, ainsi qu'à la base de la deuxième colonne de distillation 20,
- concentré en le liquide purifié de solvant et concentré en impureté en impuretés non volatiles LPSC30 sortant de l'échangeur évaporateur 30 avec un débit de 25t/h et une concentration en impuretés non-volatiles (NA₂SO₄) à 12 % en masse.

Selon cet exemple de la figure 2 représentant le mode de réalisation avec équipement de concentration par osmose inverse, on obtient une augmentation de 6% en masse en valeur absolue ou d'un ratio de 1 (100%) en relatif, soit une augmentation bien supérieure à celle du mode de réalisation sans équipement d'osmose inverse de la figure 1. Cette augmentation s'explique notamment par la diminution de débit de liquide à vaporiser Lv au secondaire 30S de l'échangeur évaporateur 30 obtenu par l'équipement de concentration par osmose inverse.

Selon un mode de réalisation, ledit procédé de traitement présentant la fourniture de ladite installation de traitement de liquides 1 comprenant la première colonne de distillation 10, la seconde colonne de distillation 20 et l'échangeur évaporateur 30, dit premier échangeur évaporateur 30 ladite installation présentant encore un deuxième échangeur évaporateur 50 muni d'un primaire 50P et d'un secondaire 50S.

Selon ce mode de réalisation avec un second échangeur-évaporateur, ledit procédé comprenant, outre les étapes simultanées (a) à (j), les étapes simultanées suivantes :
(k) Acheminement du liquide purifié du solvant et concentré en impuretés non volatiles LPSC30 en sortie du secondaire 30S du premier échangeur évaporateur 30 jusqu'au deuxième échangeur évaporeur 50,
(l) Vaporisation dans le secondaire 50S du deuxième échangeur évaporateur 50 du liquide purifié du solvant et concentré en impuretés non-volatiles, obtenant une vapeur purifiée du solvant et des impuretés non-volatiles, et un second liquide purifié des solvants et concentré en impuretés non-volatiles LPSC50, qui évacué en sortie du deuxième échangeur évaporateur 50,
(m) Compression des vapeurs du secondaire 50S du deuxième échangeur évaporateur 50 afin d'augmenter leur enthalpie, et acheminement des vapeurs compressées au primaire 50P du deuxième échangeur-évaporateur 50,
(n) Condensation des vapeurs purifiées du solvant et des impuretés non volatiles ayant échangées au primaire 50P de l'échangeur évaporateur et évacuation du liquide condensé purifié des solvants et des impuretés.

Un tel mode de réalisation avec second échangeur évaporateur 50 est illustré à la figure 1 et à la figure 2.

Le second échangeur évaporateur 50 peut être un échangeur à tubes notamment verticaux, reçus dans une cuve. Le primaire 50P du deuxième échangeur évaporateur 50 est constitué par une enceinte délimitée entre la paroi interne de la cuve et les surfaces externes des tubes, alors que le secondaire 50S du deuxième échangeur évaporateur 50 est constitué essentiellement par les volumes intérieurs des tubes. Le liquide à vaporiser (liquide purifié du solvant et concentré en impuretés non volatiles LPSC30 est alimenté au sein des tubes, et s'écoule par gravité, à l'intérieur de ceux-ci, de leur extrémité supérieure jusqu'à leur extrémité inférieure. Le liquide à vaporiser s'écoulant à l'intérieur des tubes est vaporisé partiellement par la chaleur transmise à travers des tubes, provenant de la vapeur purifiée de solvant et des impuretés non-volatiles, alimentant ladite enceinte délimitée entre la paroi de cuves et les parois externes des tubes.

Le liquide purifié du solvant et concentré en impuretés non volatiles s'écoulant à l'extrémité basse des tubes, alors concentré dans le secondaire 50S de l'échangeur évaporateur 50 est ainsi récupéré dans un collecteur au extrémités basse des tubes, puis évacué obtenant le second liquide purifié de solvant et concentré en impureté en impuretés non-volatiles LPSC50 sortant du deuxième échangeur évaporateur 50. Les vapeurs purifiées du solvant et des impuretés non-volatiles sont condensées dans le primaire 50S et ce condensat est évacué.

Ainsi et à la figure 1, le liquide purifié du solvant et concentré en impuretés non volatiles sortant du secondaire 30 S premier échangeur évaporateur 30 est acheminé en totalité au secondaire 50S du deuxième échangeur évaporateur, ce liquide étant :
- vaporisé à raison de 65t/h en vapeur purifiée du solvant et des impuretés, qui est compressée par des moyens de compresseur avant d'être acheminée au primaire 50P du deuxième échangeur-évaporateur 50,
- concentré en le second liquide purifié de solvant et concentré en impuretés non volatiles LPSC50 sortant de l'échangeur évaporateur 50 avec un débit de 10t/h et une concentration en impuretés non-volatiles (NA₂SO₄) à 30 % en masse.

Selon cet exemple de la figure 1, le procédé de traitement permet ainsi de séparer le liquide brut contenant un solvant et des impuretés non-volatiles, par exemple de l'eau contenant NH₃ (solvant) et Na₂SO₄ (impuretés non volatiles),
- une vapeur chargée en solvant, notamment chargée en NH₃ sortant du primaire 30P de l'échangeur-évaporateur 30, constituée par la vapeur de transport chargé en solvant VTCS, qui peut être ensuite condensée en un condensat chargé en solvant
- le liquide purifié du solvant et des impuretés notamment de l'eau qui comprend le condensat purifié CP récupéré dans les moyens de récupération 24, en partie basse de la deuxième colonne de distillation 20, à raison de 25t/h, mais encore le liquide condensé purifié des solvants et des impuretés condensé au primaire du second échangeur évaporateur à raison de 65t/h, soit un débit total de 90 t/h,
- le second liquide purifié du solvant et concentré en impuretés-non volatile LPSC50 à la sortie du secondaire 50S du deuxième échangeur-évaporateur. 50 à raison de 10t/h et une concentration en impuretés-non volatiles (Na₂SO₄) de 30% en masse.

De manière générale et suivant ce mode de réalisation dépourvu d'équipement de concentration par osmose inverse et pourvu d'un deuxième échangeur-évaporateur 50 :
- la concentration des impuretés non-volatiles dans le liquide brut (LB) peut être comprise entre 0,5% et 5% en masse, en particulier entre 2% et 4% en masse, en particulier 3%,
- la concentration des impuretés non volatiles dans le liquide purifié de solvant et concentré en impuretés non volatiles LPSC30 en sortie du premier échangeur évaporateur 30 peut être comprise entre 2 % et 10% en masse, en particulier entre 2.5 % et 5.5% en masse, en particulier 5%.
- la concentration des impuretés non volatiles dans le second liquide purifié de solvant et concentré en impuretés non volatiles LPSC50 en sortie du deuxième échangeur évaporateur 50 peut être comprise entre 10% % et 40% en masse, en particulier entre 20% et 32%, en particulier 30%.

Selon l'exemple de la figure 2, avec équipement de concentration par osmose inverse, le procédé de traitement permet ainsi de séparer le liquide brute contenant un solvant et des impuretés non-volatiles, par exemple de l'eau contenant NH₃ (solvant) et Na₂SO₄ (impuretés non volatiles),
- une vapeur chargée en solvant, notamment chargée en NH₃ sortant du primaire 30P de l'échangeur évaporateur 30, constituée par la vapeur de transport chargé en solvant VTCS, qui peut être ensuite condensée en un condensat chargé en solvant,
- le liquide purifié du solvant et des impuretés non volatiles notamment de l'eau qui comprend le condensat purifié CP récupéré dans les moyens de récupération 24, en partie basse de la deuxième colonne de distillation 20, à raison de 25t/h, mais encore le liquide condensé purifié des solvants et des impuretés condensé au primaire du second échangeur évaporateur à raison de 17,85t/h, mais encore le liquide osmosé sortant de la sortie du liquide osmosé de l'équipement de concentration par osmose inverse à raison de 50 t/h, soit un débit total de 92,85 t/h,
- le second liquide purifié du solvant et concentré en impuretés non-volatiles LPSC50 notamment Na₂SO₄ à la sortie du secondaire du deuxième échangeur évaporateur 50 à raison de 7,15 t/h et une concentration en impuretés-non volatiles (Na₂SO₄) de 30% en masse.

De manière générale et suivant ce mode de réalisation pourvu non seulement d'un équipement de concentration par osmose inverse, mais encore pourvu d'un deuxième échangeur évaporateur 50 :
- la concentration des impuretés non-volatiles dans le liquide brute LB peut être comprise entre 0,5% et 5% en masse, en particulier entre 2% et 4% en masse en particulier 3%,
- la concentration des impuretés non volatiles dans le liquide purifié de solvant et concentré en impuretés non-volatiles LPSC40 sortant de la sortie des concentrats de l'équipement de concentration par osmose inverse peut être comprise entre 2% et 10% en masse, en particulier entre 4% et 8% en masse en particulier 6%,
- la concentration des impuretés non-volatiles dans le liquide purifié de solvant et concentré en impuretés non-volatiles LPSC30 en sortie du premier échangeur-évaporateur 30 peut être comprise entre 4% et 30%% en masse, en particulier entre 8% et 16% en masse en particulier 12%,
- la concentration des impuretés non-volatiles dans le second liquide purifié du solvant et concentré en impuretés non-volatiles LPSC50 en sortie du deuxième échangeur évaporateur 50 est comprise entre 10% % et 40% en masse, en particulier entre 20% et 32% en masse en particulier 30%.

### Avantages

Dans tous les cas, le procédé de traitement selon la présente divulgation opérant la séparation du liquide brut en ces trois flux (i.e la vapeur chargée en solvant, le liquide purifié du solvant et des impuretés non volatiles, le liquide purifié du solvant et concentré en impuretés non-volatiles) présente avantageusement une consommation énergétique optimisée de l'installation de traitement.

De manière notable, on valorise toujours la chaleur de la vapeur de transport saturée en solvant dans l'échangeur évaporateur 30 du dispositif de génération de la valeur de transport pour la concentration des impuretés volatiles au secondaire de l'échangeur évaporateur 30, en vue de l'obtention du liquide purifié du solvant et concentré en impuretés non-volatiles LPSC30 en sortie de l'échangeur évaporateur, voire en vue de l'obtention du second liquide purifié du solvant et concentré en impuretés non-volatiles LPSC50, lorsque la dite installation présente un second échangeur-évaporateur 50.

### Application industrielle

De manière générale, le procédé de traitement selon la présente divulgation trouve un intérêt grandissant lorsque le débit de liquide brut LB alimentant la première colonne de distillation est important par exemple typiquement supérieur à 30 t /h, notamment supérieur à 70 t /h, tel que par exemple 100 t/h, et par exemple tel qu'illustré au figures 1 et 2.

### Liste des signes de référence

- 1 : Installation de traitement de liquide,
- 10. Première colonne de distillation,
- 20. Deuxième colonne de distillation,
- 24. Moyens de récupération (deuxième colonne)
- 30. Echangeur évaporateur (premier),
- 40. Equipement de concentration par osmose inverse,
- 50. Deuxième échangeur évaporateur (optionnel),
- LB. Liquide brut,
- VT. Vapeur de transport (générée par le premier échangeur-évaporateur 30),
- LPS. Liquide purifié du solvant et comprenant les impuretés non-volatiles (récupéré en partie basse de la première colonne de distillation),
- LPSC30 le liquide purifié de solvant et concentré en impuretés non-volatiles (sortant du secondaire 30S l'échangeur évaporateur 30 du dispositif générateur de la vapeur de transport VT)
- LPSC40 le liquide purifié de solvant et concentré en impuretés non-volatiles (sortant de la sortie des concentrats de l'équipement de concentration par osmose-inverse),
- LPSC50 second liquide purifié de solvant et concentré en impuretés non-volatiles (sortant du secondaire 50S du second échangeur évaporateur 50)
- VTS. Vapeur chargée de solvant (issue de la tête première colonne distillation et de la tête de la deuxième colonne de distillation),
- LV. Liquide à vaporiser (dans le secondaire du premier échangeur évaporateur 30),
- CS. Condensat chargé en solvant (issu du primaire du premier échangeur-évaporateur, et alimentant la deuxième colonne de distillation 20),
- CP. Condensat purifié (récupéré en partie basse de la deuxième colonne de distillation).

## Revendications

1. Procédé de traitement d'un liquide contenant un solvant dissout et des impuretés non-volatiles, ledit procédé étant configuré pour séparer le liquide contenant un solvant dissout et des impuretés non-volatiles en un condensat chargé en solvant, un liquide purifié du solvant et des impuretés non-volatiles, et un liquide purifié des solvants et concentré en impuretés non-volatiles
ledit procédé comprenant la fourniture d'une installation de traitement de liquides (1) comprenant :
- une première colonne de distillation (10), dite colonne de distillation des liquides bruts
- une deuxième colonne de distillation (20), dite colonne de distillation des condensats
- un dispositif de génération de vapeur de transport (VT), comprenant un échangeur évaporateur (30) muni d'un primaire (30P) et d'un secondaire (30S), générant une vapeur de transport (VT),
ledit procédé de traitement comprenant les étapes simultanées :
(a) Alimentation de la première colonne de distillation (10) de l'installation (1) avec le liquide brut (LB) contenant un solvant dissout et des impuretés non-volatiles, ledit liquide brut (LB) n'alimentant pas la deuxième colonne de distillation (20),
(b) Extraction du solvant du liquide brut (LB) dans la première colonne de distillation (10) par l'intermédiaire de la vapeur de transport (VT), le liquide (LPS) purifié du solvant et comprenant les impuretés non-volatiles chutant en partie basse de la première colonne de distillation (10),
(c) Alimentation du primaire (30P) de l'échangeur évaporateur (30) avec de la vapeur de transport chargée de solvants (VTS) issue de la première colonne de distillation (10), afin de fournir la chaleur nécessaire à la vaporisation d'un liquide (LV) à vaporiser dans le secondaire (30S) de l'échangeur évaporateur (30) prévu pour former la vapeur de transport (VT),
(d) Vaporisation dans le secondaire (30S) de l'échangeur évaporateur (30) du liquide (LV) destiné à former la vapeur de transport (VT), la vapeur de transport chargée du solvant se condensant partiellement en un condensat (CS) chargé du solvant dans le primaire (30P) de l'échangeur évaporateur (30), la vapeur (VTCS) chargée du solvant non condensée demeurant dans le primaire (30P) de l'échangeur évaporateur (30) étant purgée en vue d'être condensée en ledit condensat chargé en solvant,
(e) Alimentation de la deuxième colonne de distillation (20) avec le condensat (CS) chargé du solvant issu de l'étape (d) de vaporisation dans l'échangeur évaporateur (30),
(f) Extraction du solvant du condensat chargé de solvants (CS) dans la deuxième colonne de distillation (20), le condensat purifié (CP) se trouvant dans des moyens de récupération (24) et étant évacué sans alimenter l'échangeur évaporateur,
(g) Alimentation du primaire (30P) de l'échangeur évaporateur (30) avec la vapeur chargée de solvants (VTS) en sortie de la deuxième colonne de distillation (20), afin de fournir la chaleur nécessaire à la vaporisation du liquide (LV) prévu pour former la vapeur de transport (VT),
(h) Compression de la vapeur de transport (VT) en amont ou en aval de l'échangeur-évaporateur (30), par l'intermédiaire de moyens compresseurs afin d'augmenter l'enthalpie de la vapeur de transport (VT) employée au cours des étapes (c) et (g),
(i) Alimentation de la première colonne de distillation (10) et de la deuxième colonne de distillation (20) avec la vapeur de transport (VT) produite à l'étape (d)
(j) Alimentation de l'échangeur évaporateur (30) avec le liquide (LPS) purifié des solvants et comprenant les impuretés non-volatiles, récupéré en partie basse de la première colonne de distillation (10) à l'étape (b), qui constitue directement le liquide (LV) à vaporiser dans le secondaire (30S) de l'échangeur évaporateur (30) à l'étape (d), ou encore indirectement après concentration des impuretés non volatiles dans un équipement de concentration (40), et dans lequel une partie du liquide à vaporiser (LV) alimentant le secondaire (30S) de l'échangeur évaporateur (30) est vaporisée en ladite vapeur de transport (VT) tandis qu'une autre partie du liquide est concentrée dans le secondaire (30S) de l'échangeur évaporateur (30), puis évacuée obtenant un liquide purifié de solvant et concentré en impuretés non volatiles (LPSC30) sortant de l'échangeur évaporateur (30).

2. Procédé selon la revendication 1, dans lequel à l'étape (j) le liquide (LPS) purifié du solvant et comprenant les impuretés non-volatiles chutant en partie basse de la première colonne de distillation (10) à l'étape (b) constitue directement le liquide (LV) à vaporiser dans le secondaire (30S) de l'échangeur-évaporateur (30).

3. Procédé selon la revendication 1, dans lequel à l'étape (j) le liquide (LPS) purifié des solvants et comprenant les impuretés non-volatiles chutant en partie basse de la première colonne de distillation (10) à l'étape (b) alimente une entrée de l'équipement (40) de concentration qui est un équipement de concentration par osmose inverse, le liquide filtré (Ff) ayant traversé une membrane (41) de l'équipement d'osmose inverse étant évacué d'une sortie du liquide osmosé de l'équipement de concentration par osmose inverse sans être acheminé à l'échangeur évaporateur (30), tandis que le liquide purifié de solvant et concentré en impuretés non-volatiles (LPSC40) n'ayant pas traversé la membrane (41) sort d'une sortie des concentrats de l'équipement de concentration par osmose inverse, constituant le liquide (LV) à vaporiser dans le secondaire (30S) de l'échangeur évaporateur (30).

4. Procédé selon l'une des revendications 1 à 3, dans ledit procédé comprenant la fourniture de ladite installation de traitement de liquides (1) comprenant la première colonne de distillation (10), la seconde colonne de distillation (20) et l'échangeur évaporateur (30), dit premier échangeur évaporateur (30), ladite installation présentant encore un deuxième échangeur évaporateur (50) muni d'un primaire (50P) et d'un secondaire (50S), ledit procédé comprenant, outre les étapes simultanées (a) à (j), les étapes simultanées suivantes :
(k) Acheminement du liquide purifié du solvant et concentré en impuretés non-volatiles (LPSC30) en sortie du secondaire (30S) du premier échangeur évaporateur (30) jusqu'au deuxième échangeur évaporeur (50)
(l) Vaporisation dans le secondaire du deuxième échangeur évaporateur du liquide purifié du solvant et concentré en impuretés non-volatiles (LPSC30), obtenant une vapeur purifiée du solvant et des impuretés non-volatiles, et un second liquide purifié des solvants et concentré en impuretés non-volatiles (LPSC50), qui est évacué en sortie du deuxième échangeur évaporateur (50)
(m) Compression des vapeurs du secondaire (50S) du deuxième échangeur évaporateur (50) afin d'augmenter leur enthalpie, et acheminement des vapeurs compressées au primaire (50P) du deuxième échangeur évaporateur (50)
(n) Condensation des vapeurs purifiées du solvant et des impuretés non-volatiles ayant échangé au primaire (50P) de l'échangeur évaporateur et évacuation du liquide condensé purifié du solvants et des impuretés non-volatiles.

5. Procédé selon l'une des revendications 1 à 4 dans lequel :
- le liquide est de l'eau,
- le solvant dissout est : NH₃
- les impuretés non volatiles sont : Na₂SO₄.

6. Procédé selon la combinaison des revendications 2, 4 et 5 dans lequel :
- la concentration des impuretés non volatiles dans le liquide brut (LB) est comprise entre 0,5% et 5% en masse, en particulier entre 2% et 4% en masse, en particulier 3%,
- la concentration des impuretés non volatiles dans le liquide purifié de solvant et concentré en impuretés non volatiles (LPSC30) en sortie du premier échangeur évaporateur (30) est comprise entre 2 % et 10% en masse, en particulier entre 2.5 % et 5.5% en masse, en particulier 5%.
- la concentration des impuretés non-volatiles dans le second liquide purifié de solvant et concentré en impureté en impuretés non-volatiles (LPSC50) en sortie du deuxième échangeur évaporateur (50) est comprise entre 10% % et 40% en masse, en particulier entre 20% et 32%, en particulier 30%.

7. Procédé selon la combinaison des revendications 3, 4 et 5 dans lequel :
- la concentration des impuretés non-volatiles dans le liquide brut (LB) est comprise entre 0,5% et 5% en masse, en particulier entre 2% et 4% en masse, en particulier 3%,
- la concentration des impuretés non volatiles dans le liquide purifié de solvant et concentré en impuretés non-volatiles (LPSC40) sortant de la seconde sortie de l'équipement d'osmose inverse est comprise entre 2 % et 10% en masse, en particulier entre 4% et 8% en masse, en particulier 6%,
- la concentration des impuretés non volatiles dans le liquide purifié de solvant et concentré en impuretés non-volatiles (LPSC30) en sortie du premier échangeur évaporateur (30) est comprise entre 4% et 30% en masse, en particulier entre 8% et 16% en masse, en particulier 12%.
- la concentration des impuretés non-volatiles dans le second liquide purifié du solvant et concentré en impuretés non-volatiles LPSC50 en sortie du deuxième échangeur évaporateur (50) est comprise entre 10% et 40% en masse, en particulier entre 20% et 32% en masse, en particulier 30%.

8. Procédé selon l'une des revendications 1 à 7, dans lequel le débit de liquide brut (LB) alimentant la première colonne de distillation est supérieur à 30t /h, notamment supérieur à 70 t /h, tel que par exemple 100 t/h.

## Patentansprüche

1. Verfahren zum Behandeln einer Flüssigkeit, welche ein gelöstes Lösungsmittel und nicht-flüchtige Verunreinigungen enthält, wobei das Verfahren dazu eingerichtet ist, die Flüssigkeit, welche ein gelöstes Lösungsmittel und nicht-flüchtige Verunreinigungen enthält, in ein mit Lösungsmittel beladenes Kondensat, eine von dem Lösungsmittel und den nicht-flüchtigen Verunreinigungen gereinigte Flüssigkeit und eine Flüssigkeit aufzutrennen, welche von Lösungsmitteln gereinigt und in nicht-flüchtigen Verunreinigungen konzentriert ist,
wobei das Verfahren das Bereitstellen einer Anlage zur Behandlung von Flüssigkeiten (1) umfasst, umfassend:
- eine erste Destillationskolonne (10), genannt Rohflüssigkeiten-Destillationskolonne,
- eine zweite Destillationskolonne (20), genannt Kondensat-Destillationskolonne,
- eine Vorrichtung zum Erzeugen von Transportdampf (VT), umfassend einen Verdampfungstauscher (30), welcher mit einer Primäreinheit (30P) und einer Sekundäreinheit (30S) versehen ist, welche einen Transportdampf (VT) erzeugt,
wobei das Behandlungsverfahren die folgenden gleichzeitigen Schritte umfasst:
(a) Versorgen der ersten Destillationskolonne (10) der Anlage (1) mit der Rohflüssigkeit (LB), welche ein gelöstes Lösungsmittel und nicht-flüchtige Verunreinigungen enthält, wobei die Rohflüssigkeit (LB) nicht die zweite Destillationskolonne (20) versorgt,
(b) Extraktion des Lösungsmittels aus der Rohflüssigkeit (LB) in der ersten Destillationskolonne (10) mittels des Transportdampfs (VT), wobei die von dem Lösungsmittel gereinigte und die nicht-flüchtigen Verunreinigungen enthaltende Flüssigkeit (LPS) in einen unteren Teil der ersten Destillationskolonne (10) absinkt,
(c) Versorgen der Primäreinheit (30P) des Verdampfungstauschers (30) mit dem mit Lösungsmitteln beladenen Transportdampf (VTS), welcher von der ersten Destillationskolonne (10) ausgegeben wird, um die Wärme zu liefern, welche für die Verdampfung einer zu verdampfenden Flüssigkeit (LV) in der Sekundäreinheit (30S) des Wärmetauschers (30) benötigt wird, welche dazu vorgesehen ist, den Transportdampf (VT) zu bilden,
(d) Verdampfen in der Sekundäreinheit (30S) des Wärmetauschers (30) der Flüssigkeit (LV), welche dazu vorgesehen ist, den Transportdampf (VT) zu bilden, wobei der mit dem Lösungsmittel beladene Transportdampf teilweise zu einem mit dem Lösungsmittel beladenen Kondensat (CS) in der Primäreinheit (30P) des Verdampfungstauschers (30) kondensiert, wobei der nicht kondensierte mit Lösungsmittel beladene Dampf (TVCS), welcher in der Primäreinheit (30P) des Verdampfungstauschers (30) verbleibt, ausgestoßen wird, um zu dem mit Lösungsmittel beladenen Kondensat kondensiert zu werden,
(e) Versorgen der zweiten Destillationskolonne (20) mit dem mit dem Lösungsmittel beladenen Kondensat (CS), welches in Schritt (d) der Verdampfung in dem Verdampfungstauscher (30) ausgegeben wird,
(f) Extrahieren des Lösungsmittels aus dem mit Lösungsmitteln beladenen Kondensat (CS) in der zweiten Destillationskolonne (20), wobei sich das gereinigte Kondensat (CP) in Rückgewinnungsmitteln (24) befindet und abgeführt wird, ohne den Verdampfungstauscher zu versorgen,
(g) Versorgen der Primäreinheit (30P) des Wärmetauschers (30) mit dem mit Lösungsmitteln beladenen Dampf (VTS) am Ausgang der zweiten Destillationskolonne (20), um die Wärme zu liefern, welche für die Verdampfung der Flüssigkeit (LV) notwendig ist, welche dazu vorgesehen ist, den Transportdampf (VT) zu bilden,
(h) Komprimieren des Transportdampfs (VT) stromaufwärts oder stromabwärts des Verdampfungstauschers (30) mittels Kompressormitteln, um die Enthalpie des Transportdampfs (VT) zu erhöhen, welcher während der Schritte (c) und (g) verwendet wird,
(i) Versorgen der ersten Destillationskolonne (10) und der zweiten Destillationskolonne (20) mit dem in Schritt (d) erzeugten Transportdampf (VT),
(j) Versorgen des Verdampfungstauschers (30) mit der von Lösungsmitteln gereinigten und die nicht-flüchtigen Verunreinigungen enthaltenden Flüssigkeit (LPS), welche in dem unteren Teil der ersten Destillationskolonne (10) in Schritt (b) zurückgewonnen wird, welche direkt die in der Sekundäreinheit (30S) des Verdampfungstauchers (30) in Schritt (d) zu verdampfende Flüssigkeit (LV) bildet, oder andererseits indirekt nach einer Konzentration der nicht-flüchtigen Verunreinigungen in einer Konzentrationsvorrichtung (40), und wobei ein Teil der zu verdampfenden Flüssigkeit (LV), welche die Sekundäreinheit (30S) des Verdampfungstauschers (30) versorgt, in den Transportdampf (VT) verdampft wird, wohingegen ein anderer Teil der Flüssigkeit in der Sekundäreinheit (30S) des Verdampfers (30) konzentriert wird und dann abgeführt wird, wobei eine Flüssigkeit erhalten wird, welche von Lösungsmittel gereinigt und in nicht-flüchtigen Verunreinigungen konzentriert ist (LPSC30), welche den Verdampfungstauscher (30) verlässt.

2. Verfahren nach Anspruch 1, wobei in Schritt (j) die von Lösungsmittel gereinigte und die nicht-flüchtigen Verunreinigungen enthaltende Flüssigkeit (LPS), welche in Schritt (b) in den unteren Teil der ersten Destillationskolonne (10) absinkt, direkt die in der Sekundäreinheit (30S) des Verdampfungstauscher (30) zu verdampfende Flüssigkeit (LV) bildet.

3. Verfahren nach Anspruch 1, wobei in Schritt (j) die von den Lösungsmitteln gereinigte und die nicht-flüchtigen Verunreinigungen enthaltende Flüssigkeit (LPS), welche in Schritt (b) in den unteren Teil der ersten Destillationskolonne (10) absinkt, einen Eingang der Konzentrationsvorrichtung (40) versorgt, welche eine Konzentrationsvorrichtung durch Umkehrosmose ist, wobei die gefilterte Flüssigkeit (Ff), welche eine Membran (41) der Umkehrosmose-Vorrichtung durchlaufen hat, aus einem Ausgang für der Osmose unterzogener Flüssigkeit der Umkehrosmose-Vorrichtung entnommen wird, ohne dem Verdampfungstauscher (30) zugeführt zu werden, wohingegen die von Lösungsmittel gereinigte und in nicht-flüchtigen Verunreinigungen konzentrierte Flüssigkeit (LPSC40), welche nicht die Membran (41) durchlaufen hat, aus einem Konzentrate-Ausgang der Umkehrosmose-Konzentrationsvorrichtung austritt, wobei die in der Sekundäreinheit (30S) des Verdampfungstauschers (30) zu verdampfende Flüssigkeit (LV) gebildet wird.

4. Verfahren nach einem der Ansprüche 1 bis 3, wobei das Verfahren das Bereitstellen der Anlage zur Behandlung von Flüssigkeiten (1) umfasst, welche die erste Destillationskolonne (10), die zweite Destillationskolonne (20) und den Verdampfungstauscher (30) umfasst, welcher als erster Verdampfungstauscher (30) bezeichnet wird, wobei die Anlage ferner einen zweiten Verdampfungstauscher (50) aufweist, welcher mit einer Primäreinheit (50P) und einer Sekundäreinheit (50S) versehen ist, wobei das Verfahren zusätzlich zu den gleichzeitigen Schritten (a) bis (j) die folgenden gleichzeitigen Schritte umfasst:
(k) Befördern der von dem Lösungsmittel gereinigten und in nicht-flüchtigen Verunreinigungen konzentrierten Flüssigkeit (LPSC30) vom Ausgang der Sekundäreinheit (30S) des ersten Verdampfungstauschers (30) bis zu dem zweiten Verdampfungstauscher (50),
(l) Verdampfen in der Sekundäreinheit des zweiten Verdampfungstauschers der von dem Lösungsmittel gereinigten und in nicht-flüchtigen Verunreinigungen konzentrierten Flüssigkeit (LPSC30), wobei ein von dem Lösungsmittel und den nicht-flüchtigen Verunreinigungen gereinigter Dampf und eine zweite von den Lösungsmitteln gereinigte und in nicht-flüchtigen Verunreinigungen konzentrierten Flüssigkeit (LPSC50) erhalten wird, welche an dem Ausgang des zweiten Verdampfungstauschers (50) abgeführt wird,
(m) Verdichten der Dämpfe der Sekundäreinheit (50S) des zweiten Verdampfungstauschers (50), um ihre Enthalpie zu erhöhen, und Befördern der verdichteten Dämpfe zu der Primäreinheit (50P) des zweiten Verdampfungstauschers (50),
(n) Kondensieren der von dem Lösungsmittel und den nicht-flüchtigen Verunreinigungen gereinigten Dämpfe, welche in der Primäreinheit (50P) des Verdampfungstauschers getauscht werden, und Abführen der kondensierten von den Lösungsmitteln und den nicht-flüchtigen Verunreinigungen gereinigten Flüssigkeit.

5. Verfahren nach einem der Ansprüche 1 bis 4, wobei:
- die Flüssigkeit Wasser ist,
- das gelöste Lösungsmittel NH₃ ist,
- die nicht-flüchtigen Verunreinigungen Na₂SO₄ sind.

6. Verfahren nach der Kombination der Ansprüche 2, 4 und 5, wobei:
- die Konzentration der nicht-flüchtigen Verunreinigungen in der Rohflüssigkeit (LB) zwischen 0,5 und 5 Massen-% beträgt, insbesondere zwischen 2 und 4 Massen-%, insbesondere 3%,
- die Konzentration der nicht-flüchtigen Verunreinigungen in der von Lösungsmittel gereinigten und in nicht-flüchtigen Verunreinigungen konzentrierten Flüssigkeit (LPSC30) am Ausgang des ersten Verdampfungstauschers (30) zwischen 2 und 10 Massen-% beträgt, insbesondere zwischen 2,5 und 5,5 Massen-%, insbesondere 5%,
- die Konzentration der nicht-flüchtigen Verunreinigungen in der zweiten von Lösungsmittel gereinigten und in nicht-flüchtigen Verunreinigungen konzentrierten Flüssigkeit (LPSC50) am Ausgang des zweiten Verdampfungstauschers (50) zwischen 10 und 40 Massen-% beträgt, insbesondere zwischen 20 und 32 Massen-%, insbesondere 30%.

7. Verfahren nach der Kombination der Ansprüche 3, 4 und 5, wobei:
- die Konzentration der nicht-flüchtigen Verunreinigungen in der Rohflüssigkeit (LB) zwischen 0,5 und 5 Massen-% beträgt, insbesondere zwischen 2 und 4 Massen-%, insbesondere 3%,
- die Konzentration der nicht-flüchtigen Verunreinigungen in der von Lösungsmittel gereinigten und in nicht-flüchtigen Verunreinigungen konzentrierten Flüssigkeit (LSC40), welche aus dem zweiten Ausgang der Umkehrosmose-Vorrichtung austritt, zwischen 2 und 10 Massen-% beträgt, insbesondere zwischen 4 und 8 Massen-%, insbesondere 6%,
- die Konzentration der nicht-flüchtigen Verunreinigungen in der von Lösungsmittel gereinigten und in nicht-flüchtigen Verunreinigungen konzentrierten Flüssigkeit (LPSC30) am Ausgang des ersten Verdampfungstauschers (30) zwischen 4 und 30 Massen-% beträgt, insbesondere zwischen 8 und 16 Massen-%, insbesondere 12%,
- die Konzentration der nicht-flüchtigen Verunreinigungen in der zweiten von Lösungsmittel gereinigten und in nicht-flüchtigen Verunreinigungen konzentrierten Flüssigkeit LPCS50 am Ausgang des zweiten Verdampfungstauschers (50) zwischen 10 und 40 Massen-% beträgt, insbesondere zwischen 20 und 32 Massen-%, insbesondere 30%.

8. Verfahren nach einem der Ansprüche 1 bis 7, wobei die Strömungsrate der Rohflüssigkeit (LB), welche die erste Destillationskolonne versorgt, größer als 30 t/h ist, insbesondere größer als 70 t/h, beispielsweise 100 t/h.

## Claims

1. Method for treating a liquid containing a dissolved solvent and non-volatile impurities, said method being configured to separate the liquid containing a dissolved solvent and non-volatile impurities into a condensate containing a solvent, a liquid purified of the solvent and of the non-volatile impurities, and a liquid purified of the solvents and with a concentration of non-volatile impurities said method comprising the provision of a liquid-treatment plant (1) comprising:
- a first distillation column (10), referred to as an untreated-liquid distillation column
- a second distillation column (20), referred to as a condensate distillation column
- a device for generating transport vapour (VT), comprising an exchanger-evaporator (30) provided with a primary (30P) and a secondary (30S), generating transport vapour (VT),
said treatment method comprising the simultaneous steps:
(a) Supplying the first distillation column (10) of the plant (1) with the untreated liquid (LB) containing a dissolved solvent and non-volatile impurities, said untreated liquid (LB) not supplying the second distillation column (20),
(b) Extracting the solvent from the untreated liquid (LB) in the first distillation column (10) by means of the transport vapour (VT), the liquid (LPS) purified of the solvent and comprising the non-volatile impurities falling into the bottom part of the first distillation column (10),
(c) Supplying the primary (30P) of the exchanger-evaporator (30) with transport vapour containing solvents (VTS) coming from the first distillation column (10), in order to supply the heat necessary for vaporising a liquid (LV) to be vaporised in the secondary (30S) of the exchanger-evaporator (30) designed to form the transport vapour (VT),
(d) Vaporising, in the secondary (30S) of the exchanger-evaporator (30), the liquid (LV) intended to form the transport vapour (VT), the transport vapour containing solvent partially condensing into a condensate (CS) containing solvent in the primary (30P) of the exchanger-evaporator (30), the vapour (VTCS) containing noncondensed solvent remaining in the primary (30P) of the exchanger-evaporator (30) being drained with a view to being condensed into said condensate containing solvent,
(e) Supplying the second distillation column (20) with the condensate (CS) containing solvent coming from the step (d) of vaporisation in the exchanger-evaporator (30),
(f) Extracting solvent from the condensate containing solvents (CS) in the second distillation column (20), the purified condensate (CP) being located in recovery means (24) and being discharged without supplying the exchanger-evaporator,
(g) Supplying the primary (30P) of the exchanger-evaporator (30) with the vapour containing solvents (VTS) at the discharge from the second distillation column (20), in order to supply the heat necessary for vaporising the liquid (LV) and designed to form the transport vapour (VT),
(h) Compressing the transport vapour (VT) upstream or downstream of the exchanger-evaporator (30), by means of compressing means in order to increase the enthalpy of the transport vapour (VT) used during steps (c) and (g),
(i) Supplying the first distillation column (10) and the second distillation column (20) with the transport vapour (VT) produced at step (d),
(j) Supplying the exchanger-evaporator (30) with the liquid (LPS) purified of the solvents and comprising the non-volatile impurities, recovered at the bottom part of the first distillation column (10) at step (b), which directly constitutes the liquid (LV) to be vaporised in the secondary (30S) of the exchanger-evaporator (30) at step (d), or indirectly after concentration of the non-volatile impurities in concentration equipment (40), and wherein a part of the liquid to be vaporised (LV) supplying the secondary (30S) of the exchanger-evaporator (30) is vaporised into said transport vapour (VT) while another part of the liquid is concentrated in the secondary (30S) of the exchanger-evaporator (30), then discharged obtaining a liquid purified of solvent and with a concentration of non-volatile impurities (LPSC30) emerging from the exchanger-evaporator (30).

2. Method according to claim 1, wherein, at step (j), the liquid (LPS) purified of the solvents and comprising the non-volatile impurities falling into the bottom part of the first distillation column (10) at step (b) directly constitutes the liquid (LV) to be vaporised in the secondary (30S) of the exchanger-evaporator (30).

3. Method according to claim 1, wherein, at step (j), the liquid (LPS) purified of the solvent and comprising the non-volatile impurities falling into the bottom part of the first distillation column (10) at step (b) supplies an inlet of the concentration equipment (40) that is reverse-osmosis concentration equipment, the filtered liquid (Ff) that has passed through a membrane (41) of the reverse-osmosis equipment being discharged from an outlet of the osmosed liquid of the reverse-osmosis concentration equipment without being conveyed to the exchanger-evaporator (30), while the liquid purified of solvent and with a concentration of non-volatile impurities (LPSC40) that has not passed through the membrane (41) emerges from a concentrate outlet of the reverse-osmosis concentration equipment, constituting the liquid (LV) to be vaporised in the secondary (30S) of the exchanger-evaporator (30).

4. Method according to one of claims 1 to 3, in said method comprising the provision of said liquid-treatment plant (1) comprising the first distillation column (10), the second distillation column (20) and the exchanger-evaporator (30), referred to as the first exchanger-evaporator (30), said plant also having a second exchanger-evaporator (50) provided with a primary (50P) and a secondary (50S), said method comprising, apart from the simultaneous steps (a) to (j), the following simultaneous steps:
(k) Conveying the liquid purified of the solvent and with a concentration of non-volatile impurities (LPSC30) at the outlet of the secondary (30S) of the first exchanger-evaporator (30) to the second exchanger-evaporator (50)
(l) Vaporising, in the secondary of the second exchanger-evaporator, the liquid purified of the solvent and with a concentration of non-volatile impurities (LPSC30), obtaining a vapour purified of the solvent and of the non-volatile impurities, and a second liquid purified of the solvents and with a concentration of non-volatile impurities (LPSC50), which is discharged at the outlet of the second exchanger-evaporator (50)
(m) Compressing the vapours from the secondary (50S) of the second exchanger-evaporator (50) in order to increase their enthalpy, and conveying the compressed vapour to the primary (50P) of the second exchanger-evaporator (50)
(n) Condensing the vapours purified of the solvent and of the non-volatile impurities that exchanged at the primary (50P) of the exchanger-evaporator and discharging the condensed liquid purified of the solvents and of the non-volatile impurities.

5. Method according to one of claims 1 to 4, wherein:
- the liquid is water,
- the dissolved solvent is: this NH₃,
- the non-volatile impurities are: Na₂SO₄.

6. Method according to the combination of claims 2, 4 and 5, wherein:
- the concentration of the non-volatile impurities in the untreated liquid (LB) is between 0.5% and 5% by mass, in particular between 2% and 4% by mass, in particular 3%,
- the concentration of the non-volatile impurities in the liquid purified of solvent and with a concentration of non-volatile impurities (LPSC30) at the outlet of the first exchanger-evaporator (30) is between 2% and 10% by mass, in particular between 2.5% and 5.5% by mass, in particular 5%,
- the concentration of the non-volatile impurities in the second liquid purified of solvent and with a concentration of non-volatile impurities (LPSC50) at the outlet of the second exchanger-evaporator (50) is between 10% and 40% by mass, in particular between 20% and 32%, in particular 30%.

7. The method according to the combination of claims 3, 4 and 5, wherein:
- the concentration of the non-volatile impurities in the untreated liquid (LB) is between 0.5% and 5% by mass, in particular between 2% and 4% by mass, in particular 3%,
- the concentration of the non-volatile impurities in the liquid purified of solvent and with a concentration of non-volatile impurities (LPSC40) emerging from the second outlet of the reverse-osmosis equipment is between 2% and 10% by mass, in particular between 4% and 8% by mass, in particular 6%,
- the concentration of the non-volatile impurities in the liquid purified of solvent and with a concentration of non-volatile impurities (LPSC30) at the outlet of the first exchanger-evaporator (30) is between 4% and 30% by mass, in particular between 8% and 16% by mass, in particular 12%,
- the concentration of the non-volatile impurities in the second liquid purified of solvent and with a concentration of non-volatile impurities LPSC50 at the outlet of the second exchanger-evaporator (50) is between 10% and 40% by mass, in particular between 20% and 32% by mass, in particular 30%.

8. Method according to one of claims 1 to 7, wherein the throughput of untreated liquid (LB) supplying the first distillation column is greater than 30 t/h, in particular greater than 70 t/h, such as for example 100 t/h.
